# EUROPÄISCHE PATENTSCHRIFT

(11) **EP 0 676 321 B1**
(45) Veröffentlichungstag und Bekanntmachung des Hinweises auf die Patenterteilung: **28.07.1999**
(21) Anmeldenummer: 95105098.8
(22) Anmeldetag: 05.04.1995
(51) Int. Cl.: B61H 5/00

(54) **Doppelbremszange für Schienenfahrzeuge**
Double brake calliper for railway vehicles
Etrier de frein double pour véhicules ferroviaires

(30) Priorität: 06.04.1994 DE 4411847
(43) Veröffentlichungstag der Anmeldung: 11.10.1995
(73) Patentinhaber: KNORR-BREMSE Systeme für Schienenfahrzeuge GmbH, 80809 München (DE)
(72) Erfinder: Tetzlaff, Wilfried, D-12689 Berlin (DE); Kerscher, Albert, D-85386 Eching (DE); Starck, Günter, D-85304 Ilmmünster (DE); Reichert, Peter, D-10245 Berlin (DE)

(56) Entgegenhaltungen:
- EP-A- 0 296 351
- DE-A- 2 233 180
- DE-U- 6 751 080

## Beschreibung

Die Erfindung betrifft eine Doppelbremszange für Schienenfahrzeuge, insbesondere zweiachsige Güterwagen mit Schakenlaufwerk, mit den im Gattungbegriff des Patentanspruches 1 angegebenen Merkmalen.

Bekannt sind Anordnungen von Doppelbremszangen, die von einem Bremszylinder betätigbar und für den Einsatz in Drehgestellen von Reisezugwagen und Lokomotiven bestimmt sind, wobei nur verhälnismäßig geringe Relativbewegungen zwischen den Bremszangen und den mit diesen zusammenwirkenden Bremsscheiben auftreten. Die Doppelbremszangen sind hierbei entweder als Flachbremsgestänge zu zwei Einzelzangen aufgelöst, die mittels Zug- und Druckstangen gekoppelt sind, oder sie bestehen aus zwei Einzelbremszangen, die in Reihe angeordnet und von einer Seite her betätigbar sind.

Der Erfindung liegt die Aufgabe zugrunde, eine Doppelbremszange der eingangs angegebenen Art zu schaffen, die einfach und leicht, d.h. gegenüber dem Stand der Technik gewichtsreduziert, ist und welche auch für Schienenfahrzeuge mit großen Relativbewegungen zwischen den Bremszangen und den mit diesen zusammenwirkenden Bremsscheiben, wie es insbesondere bei zweiachsigen Güterfahrzeugen mit Schakenlaufwerk, d. h. einer Schakenaufhängung in der Fahrzeugfederung, der Fall ist, geeignet ist. Die zu schaffende Doppelbremszange soll nur geringen Wartungsaufwand erfordern und einen hohen Wirkungsgrad aufweisen, ferner soll sie gegen Vereisungen unempfindlich sein.

Diese Aufgabe wird durch den Gegenstand des Anspruches 1 gelöst. In den Unteransprüchen sind nach der Erfindung zweckmäßig und vorteilhafte, weitere Ausbildungsmöglichkeiten einer derartigen Doppelbremszange angegeben.

Ein besonderer Vorteil der Erfindung besteht gegenüber Doppelbremszangen, wie sie z. B. die gattungsgemäße DE-AS 24 49 853 zeigt, darin, daß insbesondere auch der Bremszylinder an Hängelaschen aufgehängt ist. Die Hängelaschenaufhängung ist gegenüber den Längs-und Flachführungen der DE-AS 24 49 853 insbesondere auch gegen Vereisungen aller Art unempfindlich.

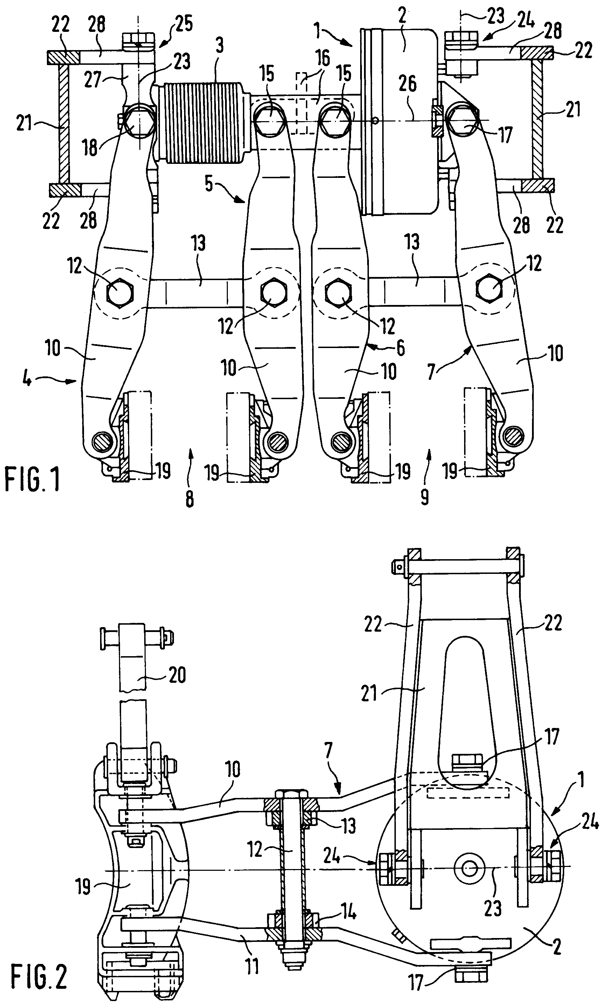

In der Zeichnung ist schematisch ein bevorzugtes Ausführungsbeispiel für eine nach der Erfindung ausgebildete Doppelbremszange dargestellt, und zwar zeigt
- Fig. 1: eine Aufsicht und
- Fig. 2: eine quer zur Fahrzeuglängsrichtung gerichtete Stirnansicht der Doppelbremszange.
Die Doppelbremszange weist einen Bremszylinder 1 mit einem Zylindergehäuse 2 und einem Kolbenstangenrohr 3 auf, aus welchem die nicht näher bezeichnete Kolbenstange austritt; zweckmäßig ist in den Bremszylinder 1 eine Nachstellvorrichtung integriert. Weiterhin weist die Doppelbremszange vier nebeneinander angeordnete Zangenhebel 4, 5, 6, und 7 auf, deren je zwei benachbarte Zangenhebel 4 und 5 bzw. 6 und 7 einer von zwei Einzelzangen 8 bzw. 9 zugehören. Jeder Zangenhebel 4, 5, 6 und 7 besteht aus jeweils zwei zueinander relativbeweglichen und im wesentlichen parallelen, vertikalversetzt angeordneten Wangenhebeln 10 bzw. 11, wie es aus Fig. 2 ersichtlich ist. Die beiden Wangenhebel 10 und 11 eines jeden Zangenhebels 4, 5, 6, und 7 sind im mittleren Bereich ihrer Längserstreckung an einem Bolzen 12 relativ zueinander drehbar gelagert, der Bolzen 12 erstreckt sich zwischen den beiden Wangenhebeln 10 und 11 und ist zweckmäßig relativ zu beiden Wangenhebeln 10 und 11 drehbar.

Nahe jedes Wangenhebels 10 bzw. 11 ist am Bolzen 12 je eine Zugstange 13 bzw 14 drehbar gelagert, die Zugstangen 13 und 14 koppeln die einander gegenüberstehenden Wangenhebel 10 bzw. 11 der beiden einer Einzelzange 8 bzw. 9 zugehörenden Zangenhebel 4 und 5 bzw. 6 und 7 miteinander. Die einen Enden der beiden Wangenhebel 10 und 11, welche den beiden mittleren, einander benachbarten Zangenhebeln 5 und 6 der beiden Einzelzangen 8 und 9 zugehören, sind mttels Festlager 15 drehbar an einem Lagerteil 16 angelenkt, welches am nicht dargestellten Rahmen des Schienenfahrzeuges vorzugsweise lösbar befestigt ist. Die entsprechenden, einen Enden der Wangenhebel 10 und 11 der beiden restlichen, äußeren Zangenhebel 4 und 7 sind in Lagerungen 17 am Zylindergehäuse 2 bzw. Lagerungen 18 an der Kolbenstange des Bremszylinders 1 angelenkt. An den anderen Enden der beiden, jeweils einem Zangenhebel 4, 5, 6 oder 7 zugehörendn Wangenhebel 10 und 11 ist jeweils eine Bremsbacke 19 angelenkt. Zwischen die beiden gegenüberstehenden Bremsbacken 19 jeder Einzelzange 8 bzw. 9 greift eine nicht dargestellte Bremsscheibe ein; die beiden Bremsscheiben gehören einem nicht gezeigten Radsatz des Schienenfahrzeuges an, sie können bevorzugt Achs-, aber auch Radbremsscheiben sein.

Jede Bremsbacke 19 ist wie allgemein üblich mittels einer Hängelasche 20 im wesentlichen nur in einer Querebene zur Längsrichtung des Schienenfahrzeuges schwingbar am Fahrzeugrahmen aufgehängt. In Abänderung hierzu können die Hängelaschen 20 anstatt an den Bremsbacken 19 an den diesen nahen Bereichen der Zangenhebel 4 bis 7 angelenkt sein. Nahe der beiden axialen Enden sind am Bremszylinder 1 ebenfalls Hängelaschen 21 angelenkt, die gleichartig zueinander ausgebildet sind und welche sich aufwärts erstrecken und mit ihren oberen Enden am Fahrzeugrahmen im wesentlichen nur in einer Querebene zur Längsrichtung des Schienenfahrzeuges schwingbar angelenkt sind, der Bremszylinder 1 kann daher quer zur Fahrtrichtung frei pendeln. Die beiden Hängelaschen 21 sind in Art eines H-Hebels doppelwangig mit zwei fest miteinander verbundenen Wangen 22 ausgebildet, die Drehachsen 23 ihrer Anlenkungen 24 bzw. 25 am Bremzylinder 1 verlaufen parallel zur Fahrzeuglängsrichtung und schneiden vorzugsweise die Achse 26 des Bremszylinders 1. Die kolbenstangenseitige Anlenkung 25 befindet sich an einem die Anlenkbasis verbreiternden Zwischenteil 27, welches vorzugsweise mit einem Gehäuseteil, in Abänderung hierzu mit einem Kolbenstangenrohr oder der Kolbenstange des Bremszylinders 1 verbunden ist. Die beiden Hängelaschen 21 sind bremszylinderseitig L-artig in Richtung zum Bremszylinder 1 abgewinkelt gekröpft ausgebildet und am Ende der Abkröpfungen 28 angelenkt, die oberen Wangenhebel 10 der beiden äußeren Zangenhebel 4 und 7 können hierdurch von den Hängelaschen 21 unbehindert zum Brmszylinder 1 geführt werden.

Die Doppelbremszange weist in allen ihren Lagerstellen nur Drehlager auf, welche in einfacher Weise als Bolzen-Buchsen-Drehlager ausbildbar sind, welche bei hoher, wartungsfreier Betriebszeit mit geringer Reibung ausbildbar sind; die Doppelbremszange ist daher weitgehend wartungsfrei und mit nur geringem Kraftverlust, also hohem Wirkungsgrad betreibbar. Sie benötigt nur wenige Gestängeteile und ist daher billig und gewichtssparend. Bei Nachstellvorgängen kann sich der Bremszylinder 1 unbeschadet der Funktion der Doppelbremszange frei nach beiden Seiten ausdehnen. Die Doppelbremszange weist zudem durch die Relativbeweglichkeit der Wangenhebel 10 und 11 eine hohe Eigenbeweglichkeit auf, die Bremsbacken 19 können daher zwangsfrei großen, relativen Schrägstellungen und/oder Seitenversetzungen der Bremsscheiben folgen, ohne die Funktion der Doppelbremszange zu beeinträchtigen. Auf die Doppelbremszange in Fahrzeuglängsrichtung wirkende Kräfte, z.B. beim Halteruck des Schienenfahrzeuges, werden durch die Hängelaschen 21 aufgenommen.

Selbstverständlich sind Abänderungen zum beschriebenen Ausfürhrungsbeispiel möglich: So kann je Einzelzange 8 oder 9 nur je eine Zugstange vorgesehen sein, die aber etwa mittig zwischen den beiden Wangenhebeln 10 und 11 am Bolzen 12 kugelgelenkartig auslenkbar anzulenken ist; der Bolzen 12 wird hierbei biegebeansprucht. Die Hängelaschen 21 können ungleichartig ausgebildet werden, es muß nur deren eine H-hebelartig ausgeformt werden; gegebenenfalls reicht eine am Bremszylinder mittig anzulenkende Hängelasche zu dessen Aufhängung.

### Kurzfassung:

Die Doppelbremszange ist insbesonder für zweiachsige Güterwagen mit Schakenlaufwerk vorgesehen, bei welchen große Schrägstellungen der Bremsscheiben relativ zur Bremszange auftreten können, Sie weist zwei nebeneinander angeordnete Einzelzangen 8 und 9 auf. Jeder Zangenhebel 4 bis 7 ist doppelwangig mit zwei relativbeweglichen Wangenhebeln 10 und 11 ausgebildet, die lediglich durch einen mittig an ihnen angelenkten Bolzen 12 verbunden sind. Nahe der Wangenhebel 10 und 11 sind an den Bolzen 12 die einander entsprechenden Wangenhebel 10 oder 11 der beiden Zangenhebel 4 und 5 bzw. 6 und 7 jeweils einer Einzelzange 8 oder 9 koppelnde Zugstangen 13 bzw. 14 angelenkt. Die beiden mittleren Zangenhebel 5 und 6 sind an Festlagern 15, die beiden äußeren Zangenhebel 4 und 7 am Zylindergehäuse 2 bzw. der Kolbenstange des Bremszylinders 1 angelenkt. Die Bremsbacken 19 und der Bremszylinder 1 sind in Fahrzeugquerebenen pendelnd aufgehängt, wobei zwei nahe der axialen Enden am Bremszylinder 1 angreifende Hängelaschen 21 zur Versteifung in Fahrzeuglängsrichtung starr doppelwangig ausgebildet sind.

| Aufstellung der Bezugszahlen: | | | |
|---|---|---|---|
| 1 | Bremszylinder | 2 | Zylindergehäuse |
| 3 | Kolbenstangenrohr | 4 | Zangenhebel |
| 5 | Zangenhehel | 6 | Zangenhebel |
| 7 | Zangenhebel | 8 | Einzelzange |
| 9 | Einzelzange | 10 | Wangenhebel |
| 11 | Wangenhebel | 12 | Bolzen |
| 13 | Zugstange | 14 | Zugstange |
| 15 | Festlager | 16 | Lagerteil |
| 17 | Lagerung | 18 | Lagerung |
| 19 | Bremsbacke | 20 | Hängelasche |
| 21 | Hängelasche | 22 | Wange |
| 23 | Drehachse | 24 | Anlenkung |
| 25 | Anlenkung | 26 | Achse |
| 27 | Zwischenteil | 28 | Abkröpfung |

## Patentansprüche

1. Doppelbremszange für Schienenfahrzeuge, insbesondere zweiachsige Güterwagen mit Schakenlaufwerk, mit
- vier doppelwangigen Zangenhebeln (4, 5, 6 und 7), deren je zwei, einer der beiden seitlich zueinander versetzt angeordneten Einzelzangen (8; 9) zugehörende Zangenhebel (4, 5 und 6, 7) durch Zugstangen (13, 14) gekoppelt sind,
- an Enden der Zangenhebel (4, 5, 6 und 7) angelenkten Bremsbacken (19) und
- einem ggf. eine Nachstellvorrichtung beinhaltenden Bremszylinder (1),
- wobei jeder Zangenhebel (4, 5, 6 und 7) zwei zueinander relativ bewegliche, im wesentlichen zueinander parallele Wangenhebel (10 und 11) aufweist,
dadurch gekennzeichnet, daß
- das eine Ende der Wangenhebel (10 und 11) bzw. die an dieses Ende angelenkten Bremsbacken (19) und der an das andere Ende der Wangenhebel (10 und 11) angelenkte Bremszylinder (1) jeweils an im wesentlichen nur Pendelbewegungen quer zur Längsrichtung des Schienenfahrzeuges zulassenden Hängelaschen (20 und 21) aufgehängt sind.

2. Doppelbremszange nach Anspruch 1, dadurch gekennzeichnet,
- daß die Wangenhebel (10 und 11) jedes Zangenhebels (4, 5, 6 und 7) in ihrem mittleren Bereich an einem die beiden Wangenhebel (10 und 11) verbindenden Bolzen (12) relativ zueinander drehbar gelagert sind,
- daß die einander gegenüberstehenden Wangenhebel (10 und 11) der beiden Zangenhebel (4 und 5 bzw. 6 und 7) jeder Einzelzange (8; 9) vermittels je einer gesonderten, drehbar angelenkten Zugstange (13 bzw. 14) miteinander verbunden sind,
- daß die einen Enden der Wangenhebel (10 und 11) der beiden mittleren, einander benachbartem Zangenhebel (5 und 6) der beiden Einzelzangen (8 und 9) mittels Festlager (15) drehbar an einem festen Lagerteil (16) gelagert sind,
- daß die einen Enden der Wangenhebel (10 und 11) der beiden äußeren Zangenhebel (4 und 7) der beiden Einzelzangen (8 und 9) am Zylindergehäuse (2) bzw. der Kolbenstange des Bremszylinders (1) angelenkt sind.

3. Doppelbremszangen nach Anspruch 1 oder 2, dadurch gekennzeichnet, daß die Zugstangen (13 und 14) nahe der Wangenhebel (10 bzw. 11) an den Bolzen (12) angelenkt sind.

4. Doppelbremszange nach Anspruch 1, 2 oder 3, dadurch gekennzeichnet, daß der Bremszylinder (1) nahe seiner axialen Enden an je einer Hängelasche (21) ist und daß zumindest eine der beiden Hängelaschen (21) in Art eines H-Hebels doppelwandig mit zwei fest miteinander verbundenen Wangen (22) ausgebildet ist.

5. Doppelbremszange nach Anspruch 4, dadurch gekennzeichnet, daß die beiden am Bremszylinder (1) angelenkten Hängelaschen (21) gleichartig zueinander ausgebildet sind, wobei die kolbenstangenseitige Hängelasche über ein ihre Anlenkbasis verbreiterndes Zwischenteil (27) angelenkt ist.

6. Doppelbremszange nach Anspruch 5, dadurch gekennzeichnet, daß die Wangen (22) der am Bremszylinder (1) angelenkten Hängelaschen (21) bremszylinderseitig L-artig in Richtung zum Bremszylinder abgewinkelt gekröpft geformt und am Ende der Abkröpfung (28) angelenkt sind.

## Claims

1. Double brake caliper for rail vehicles, in particular twin-axle goods wagons with link mechanism, having
- four double-web caliper levers (4, 5, 6 and 7), of which two caliper levers (4, 5 and 6, 7) associated in each case with one of the two individual calipers (8; 9) arranged laterally offset with respect to each other are coupled by tie rods (13, 14),
- brake shoes (19) articulated at ends of the caliper levers (4, 5, 6 and 7) and
- a brake cylinder (1) possibly containing an adjustment device,
- wherein each caliper lever (4, 5, 6 and 7) has two web levers (10 and 11) movable relatively with respect to each other and substantially parallel to each other,
characterised in that
- one end of the web levers (10 and 11), or the brake shoes (19) articulated on this end, and the brake cylinder (1) articulated on the other end of the web levers (10 and 11) are respectively suspended on suspension plates (20 and 21) essentially permitting only pendulum movements transversely to the longitudinal direction of the rail vehicle.

2. Double brake caliper according to claim 1,
characterised in that
- the web levers (10 and 11) of each caliper lever (4, 5, 6 and 7) are rotatably mounted relatively to each other in their centre region on a pin (12) joining the two web levers (10 and 11),
- the opposite web levers (10 and 11) of the two caliper levers (4 and 5 or 6 and 7) of each individual caliper (8; 9) are joined together by means of a separate, rotatably articulated tie rod (13 or 14),
- the first ends of the web levers (10 and 11) of the two adjacent middle caliper levers (5 and 6) of the two individual calipers (8 and 9) are mounted rotatably on a fixed bearing part (16) by means of fixed bearings
(15),
- the first ends of the web levers (10 and 11) of the two outer caliper levers (4 and 7) of the two individual calipers (8 and 9) are articulated on the cylinder housing (2) and the piston rod of the brake cylinder (1) respectively.

3. Double brake calipers according to claim 1 or 2, characterised in that the tie rods (13 and 14) are articulated near the web levers (10 or 11) on the pin (12).

4. Double brake caliper according to claim 1, 2 or 3, characterised in that the brake cylinder (1) is articulated near its axial ends on a respective suspension plate (21) and in that at least one of the two suspension plates (21) is formed with two walls in the manner of an H-lever with two webs (22) fixedly joined together.

5. Double brake caliper according to claim 4, characterised in that the two suspension plates (21) articulated on the brake cylinder (1) are of similar construction to each other, the suspension plate on the piston rod side being articulated by means of an intermediate portion (27) widening its articulation base.

6. Double brake caliper according to claim 5, characterised in that the webs (22) of the suspension plates (21) articulated on the brake cylinder (1) are formed so as to be bent away at an angle on the brake cylinder side like an L in the direction of the brake cylinder and are articulated at the end of the angled bend (28).

## Revendications

1. Etrier de frein double pour des véhicules se déplaçant sur rails, en particulier pour des wagons de marchandises à deux essieux équipés d'un mécanisme de roulement à maillons comportant
- quatre leviers d'étrier à double joue (4, 5, 6 et 7), dont chaque paire de deux leviers d'étrier (4, 5 et 6, 7), appartenant à l'un des deux étriers individuels (8; 9) montés en décalage latéral l'un par rapport à l'autre est accouplé par des tiges de traction (13, 14),
- des mâchoires de frein (19) articulées aux extrémités des leviers d'étrier (4, 5, 6 et 7), et
- un cylindre de frein (1) renfermant éventuellement un dispositif de rattrapage,
- chaque levier d'étrier (4, 5, 6 et 7) comportant deux leviers formant joue (10 et 11), mobiles l'un par rapport à l'autre et sensiblement parallèles entre eux,
caractérisé en ce que
- l'une des extrémités des leviers formant joue (10 et 11) ou les mâchoires de frein (19) articulées à cette extrémité et le cylindre de frein (1), articulé à l'autre extrémité des leviers formant joue (10 et 11), sont respectivement suspendus à des attaches de suspension (20 et 21) qui n'autorisent essentiellement que des mouvements oscillants dans une direction transversale à la direction longitudinale du véhicule se déplaçant sur rails.

2. Etrier de frein double selon la revendication 1, caractérisé
- en ce que les leviers formant joue (10 et 11) de chaque levier d'étrier (4, 5, 6 et 7) sont montés à rotation l'un par rapport à l'autre, dans leur partie médiane, sur un axe (12) qui relie les deux leviers formant joue (10 et 11),
- en ce que les leviers formant joue (10 et 11), placés l'un en vis-à-vis de l'autre, des deux paires leviers d'étrier (4 et 5 ou 6 et 7) de chaque étrier individuel (8, 9) sont respectivement, reliés l'un à l'autre au moyen d'une tige de traction (13, 14) séparée, articulée en pivotant,
- en ce que les extrémités des leviers formant joue (10 et 11) des deux leviers d'étrier centraux (5 et 6), voisins l'un de l'autre, des deux étriers individuels (8 et 9) sont montées à rotation, au moyen de paliers fixes (15), sur une pièce d'appui fixe (16),
- en ce que les extrémités des leviers formant joue (10 et 11) des deux leviers d'étrier extérieurs (4 et 7) des deux étriers individuels (8 et 9) sont articulées sur le corps (2) ou sur la tige de piston du cylindre de frein (1).

3. Etrier de fiein double selon la revendication 1 ou 2, caractérisé en ce que les tiges de traction (13 et 14) sont articulées sur les axes (12) à proximité des leviers formant joue (10 ou 11).

4. Etrier de frein double selon la revendication 1, 2 ou 3, caractérisé en ce que le cylindre de frein (1) est, à proximité de chacune de ses extrémités axiales, articulé sur une attache de suspension (21) et en ce qu'au moins l'une des deux attaches de suspension (21) est réalisée sous forme d'un levier en H, à double joue, comportant deux joues (22) reliées rigidement l'une à l'autre.

5. Etrier de fiein double selon la revendication 4, caractérisé en ce que les deux attaches de suspension (21), articulées sur le cylindre de frein (1), ont la même structure, l'attache de suspension située du côté de la tige de piston étant articulée par l'entremise d'une pièce intermédiaire (27) élargissant sa base d'articulation.

6. Etrier de frein double selon la revendication 5, caractérisé en ce que les joues (22) des attaches de suspension (21), articulées sur le cylindre de frein (1), ont une forme angulaire, étant coudées en L du côté du cylindre de frein, et en direction du cylindre de frein, et sont articulées à l'extrémité de la partie coudée (28).
